# EUROPEAN PATENT SPECIFICATION

(11) **EP 2 180 742 B1**
(45) Date of publication and mention of the grant of the patent: **16.09.2015**
(21) Application number: 08167496.2
(22) Date of filing: 24.10.2008
(51) Int. Cl.: H04W 48/10

(54) **Method and a device for enabling a mobile terminal to access to a wireless cellular telecommunication network**
Verfahren und Vorrichtung zur Ermöglichung des Zugriffs eines mobilen Endgeräts auf ein drahtloses Telekommunikationsnetzwerk
Procédé et dispositif pour activer un terminal mobile pour accéder à un réseau de télécommunications cellulaire sans fil

(43) Date of publication of application: 28.04.2010
(73) Proprietor: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: Bonneville, Hervé, 35708 Rennes Cedex 7 (FR); Brunel, Loïc, 35708 Rennes Cedex 7 (FR); Gresset, Nicolas, 35708 Rennes Cedex 7 (FR); Khanfouci, Mourad, 35708 Rennes Cedex 7 (FR)
(74) Representative: Maillet, Alain

(56) References cited:
- WO-A1-00/56100
- WO-A2-2008/030171
- US-B1- 6 188 681
- 3GPP: "3GPP TS 22.220 V0.3.0,Technical Specification Group Services and System Aspects;Service requirements for Home NodeBs and Home eNodeBs; (Release 9)" 3RD GENERATION PARTNERSHIP PROJECT, 25 July 2008 (2008-07-25), XP050228828 SOPHIA ANTIPOLIS CEDEX ; FRANCE
- KAARANEN H ET AL: "UMTS NETWORKS, ARCHITECTURE, MOBILITY AND SERVICES. passage" UMTS NETWORKS. ARCHITECTURE, MOBILITY AND SERVICES, WILEY, US, 1 January 2001 (2001-01-01), pages 99-142,351-385, XP002524273
- 3GPP: "3GPP TS 25.331 V6.4.0: Technical Specification Group Radio Access Network; Radio Resource Control (RRC); Protocol Specification (Release 6)" 3RD GENERATION PARTNERSHIP PROJECT, December 2004 (2004-12), XP002524274 SOPHIA ANTIPOLIS; FRANCE
- QUALCOMM, TELECOM ITALIA: "3GPP TS 22.220 Open Home Node B and Home eNode B" 3RD GENERATION PARTNERSHIP PROJECT TSG-SA1 #41, 15 July 2008 (2008-07-15), - 21 July 2008 (2008-07-21) XP050228604 SOPHIA ANTIPOLIS; FRANCE

## Description

The present invention relates generally to a method and a device for enabling a mobile terminal to access to a wireless cellular telecommunication network comprising plural base stations.

Wireless cellular telecommunication networks are largely deployed but there are still some areas not covered by the base stations of the wireless cellular telecommunication network.

For example, the access to the wireless cellular telecommunication network might not be possible for a mobile terminal located in a building if the signals radiated by the base stations are too attenuated.

Solutions are proposed today. Particular base stations, like home base stations or femto base stations provide coverage areas within the buildings.

These home base stations enable a limited number of mobile terminals to access the wireless cellular telecommunication network through their respective resources in order to maintain the quality of service offered by the home base stations to their mobile terminals or to provide the desired service to their mobile terminals or both. The mobile terminals allowed to access the resources of the network through the home base station may be determined by the owner of the home base station, the network or a combination of both.

The owner must be understood here in the general sense: the owner may only be the main user of the home base station, the owner may be the person who rents the home base station or the owner may be the person who accommodates the home base station in his house or office.

For example, only mobile terminals of the owner of the home base station and its family can access to the wireless cellular telecommunication network through the home base station. These mobile terminals are associated with the home base station. Other mobile terminals cannot access the wireless cellular telecommunication network through the home base station. The other mobile terminals are not associated with the home base station.

When a home base station is not operational, for example when the home base station is powered off, broken, or disconnected from the telecommunication network, the mobile terminal which is associated with the home base station cannot access the wireless cellular telecommunication network through another home base station if the mobile terminal is not allowed to access to the wireless cellular telecommunication network through this other home base station. This situation may result in the impossibility for the mobile terminal to access to the wireless cellular telecommunication network. For instance, it happens when the mobile terminal is only surrounded by home base stations, which it is not associated with and it is not under the coverage of macro base stations, which give open access to all mobile terminals. The latter macro base stations are, for instance, base stations of a regular macrocellular deployment.

If the mobile terminal attempts to access the wireless cellular telecommunication network through the other home base station, the wireless cellular telecommunication network rejects the mobile terminal as there is no association between the mobile terminal and the other home base station.

The Third Generation Partnership Project; technical specification group services and system aspects; service requirements for home nodeBs and home enodeBs (release 9" 3GPP draft TS 22.220 V0.3.0 discloses white lists for home base stations.

The patent application WO 2008/030171 discloses outage compensatory radio base station procedure wherein when a first base station is off, a second base station dynamically modifies antenna tilt, power of downlink common control channel, neighbour list parameter pertaining to one of handover.

The present invention aims at allowing a mobile terminal, which is associated with a base station like a home base station, to be aware of at least another base station which the mobile terminal is not associated with. Furthermore, the present invention enables the mobile terminal, being aware of the other base station to get access to the wireless cellular telecommunication network even if the base station it is associated with is not operational.

To that end, the present invention concerns a method for enabling a mobile terminal to access a wireless cellular telecommunication network comprising plural base stations and a core network device, the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, **characterised in that** the method comprises the steps, executed by one second base station, of :
- receiving, from the core network device, a message requesting the second base station to transfer signals that should be transferred by one first base station,
- obtaining information identifying the first base station,
- broadcasting signals identifying the first base station,
- transferring signals that should be transferred by the first base station to the mobile terminal,
- receiving signals from the mobile terminal, the signals being intended for the first base station.

The present invention concerns also a device for enabling a mobile terminal to access a wireless cellular telecommunication network comprising plural base stations and a core network device, the mobile terminal being allowed to access the wireless cellular telecommunication network through at least one first base station of which information enabling the identification of signals transferred by the at least one first base station are memorized by the mobile terminal, the mobile terminal not memorizing information enabling the identification of signals transferred by a second base station, characterised in that the device for enabling a mobile terminal to access a wireless cellular telecommunication network is included in the second base station and comprises :
- means for receiving, from the core network device, a message requesting the second base station to transfer signals that should be transferred by one first base station,
- means for obtaining information identifying the first base station,
- means for broadcasting signals identifying the first base station,
- means for transferring signals that should be transferred by the first base station to the mobile terminal,
- means for receiving signals from the mobile terminal, the signals being intended for the first base station.

Thus, the mobile terminal is able to access the wireless cellular telecommunication network exactly in the same way as if the first base station were still operational. For the mobile terminal, the fact that the first base station is not operational is totally transparent. Thus, no special mechanism has to take place at the mobile terminal in addition to the normal procedure for connection and communication with the first base station.

According to a particular feature, the second base station:
- broadcasts signals identifying the second base station,
- transfers signals to another mobile terminal,
- receives signals from the other mobile terminal, the signals being intended for the second base station.

Thus, the regular behaviour of the second base station is not impaired. The second base station is still able to communicate with the mobile terminal accessing the wireless cellular telecommunication network through the second base station, even if the first base station is not operational and at the same time, the second base station can communicate with the other mobile terminal accessing the wireless cellular telecommunication network through the second base station.

According to a particular feature, the broadcasted signals identifying the first base station are under the form of at least one first symbol of at least one first frame and the broadcasted signals identifying the second base station are under the form of at least one second symbol of at least one second frame and said first and second frames are synchronized or said first and second symbols are synchronized or said first and second frames and said first and second symbols are synchronized.

Thus, the interference between broadcasted signals identifying the first base station and the broadcasted signals identifying the second base station can be mitigated more easily.

According to a particular feature, the signals that should be transferred by the first base station to the mobile terminal are under the form of at least one first symbol of at least one first frame and the signals transferred by the second base station to the other mobile terminal are under the form of at least one second symbol of at least one second frame and said first and second frames are synchronized or said first and second symbols are synchronized or said first and second frames and said first and second symbols are synchronized.

Thus, the interference between signals that should be transferred by the first base station to the mobile terminal and signals transferred to another terminal can be reduced. Indeed, if the signals are synchronous, for instance at the frame and/or symbol level, it is much easier to design a joint scheduler assigning downlink resources in a way mitigating the interference.

Furthermore, the interference between signals being intended for the first base station and signals being intended for the second base station can be reduced. Indeed, if the signals are synchronous, for instance at the frame and/or symbol level, when received at the second base station, it is much easier to design a joint scheduler assigning uplink resources in a way mitigating the interference.

The present invention concerns also a method for enabling a mobile terminal to access a wireless cellular telecommunication network comprising plural base stations and a core network device, the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, characterised in that the method comprises the steps, executed by the core network device, of:
- determining if one first base station that should transfer signals to the mobile terminal is not operational,
- transferring a message requesting the second base station to transfer signals that should be transferred by one of the first base stations of which information enabling the identification of signals transferred by the first base station is comprised in the list if the first base station that should transfer signals to the mobile terminal is not operational,
- allowing the mobile terminal to access the wireless cellular telecommunication network through the second base station which transfers signals that should be transferred by one of the first base stations of which information enabling the identification of signals transferred by the first base station are comprised in the list.

The present invention concerns also a device for enabling a mobile terminal to access a wireless cellular telecommunication network comprising plural base stations and a core network device, the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, characterised in that the device for enabling a mobile terminal to access the wireless cellular telecommunication network is included in the core network device and comprises :
- means for determining if one first base station that should transfer signals to the mobile terminal is not operational,
- means for transferring a message requesting the second base station to transfer signals that should be transferred by one of the first base stations of which information enabling the identification of signals transferred by the first base station are comprised in the list if the first base station that should transfer signals to the mobile terminal is not operational,
- means for allowing the mobile terminal to access the wireless cellular telecommunication network through the second base station which transfers signals that should be transferred by one of the first base stations of which information enabling the identification of signals transferred by the first base station are comprised in the list.

Thus, the mobile terminal is able to access the wireless cellular telecommunication network through the second base station without being aware of this second base station which the mobile terminal is not associated with.

Thus, the present invention enables the mobile terminal, not being aware of the second base station, to get access to the wireless cellular telecommunication network even if the first base station is not operational.

According to a particular feature, the signals that should be transferred by one first base station are the signals that should be transferred by the first base station which is not operational.

Thus, the choice of the signals is straightforward and the mobile terminal or each mobile terminal when plural mobile terminal are associated with the first base station which is not operational is able to identify the signals.

Otherwise, if the signals are signals transferred by one first base station which is different from the base station which is not operational, the core network device has to make sure that the or each mobile terminal associated with the first base station which is not operational is also associated with the first base station which is different from the base station which is not operational.

According to a particular feature, the signals that should be transferred by one first base station are the signals that should be transferred by one first base station which is different from the base station which is not operational.

Thus, if the first base station becomes operational, there is no problem of interference between the signals transferred by the second base station and the signals transferred by the first base station when it is operational again.

According to a particular feature, the signals that should be transferred by one first base station and transferred by the second base station are broadcasted signals identifying the first base station and/or are signals representative of data related to a communication in which the mobile terminal is involved.

Thus, the mobile terminal is able to access the wireless cellular telecommunication network through the second base station without being aware of this second base station which the mobile terminal is not associated with.

According to a particular feature, the core network device selects the first base station that should transfer the signals among the first base stations of which information enabling the identification of signals transferred by the first base station is comprised in the list, the selected first base station being the first base station which transfers signals identifying the first base station which are as orthogonal as possible to the one identifying the second base station and transferred by the second base station.

Thus, the interference between signals identifying the first base station and the one identifying the second base station is mitigated, especially if both signals are sent synchronously.

This low interference enables easier synchronisation with signals identifying the first base station or signals identifying the second base station and thus enables easier connection of the mobile terminals.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network in which the present invention is implemented;
Fig. 2 is a diagram representing the architecture of a base station in which the present invention is implemented ;
Fig. 3 is a diagram representing the architecture of a core network device in which the present invention is implemented ;
Fig. 4a discloses an example of an algorithm executed by a core network device according to the present invention for each mobile terminal located in the area managed by the core network device ;
Fig. 4b discloses an example of an algorithm executed by a core network device according to a variant of realisation of the present invention for at least a part of the base stations located in the area managed by the core network device ;
Fig. 5 discloses an example of an algorithm executed by a base station according to the present invention for each mobile terminal located in the area managed by the core network device ;
Fig. 6 discloses an example of an algorithm executed by a base station according to the present invention when another base station replaced by the base station becomes operational.

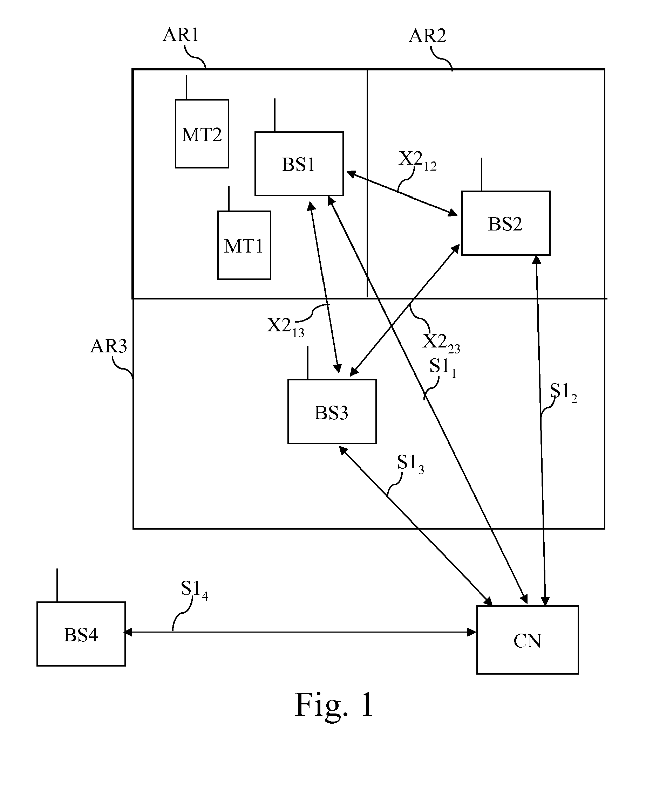

**Fig. 1** represents a wireless cellular telecommunication network in which the present invention is implemented.

In Fig. 1, four base stations BS1, BS2, BS3 and BS4 of a wireless cellular telecommunication network and two mobile terminals MT1 and MT2 are shown.

The base stations BS are for example home base stations BS like femto base stations or pico base stations. The base stations BS are for example located into homes and may enable mobile terminals MT to access the wireless cellular telecommunication network.

Two mobile terminals MT1 and MT2 are shown in the Fig. 1. Each mobile terminal MT memorises a list, named white list, which identifies each base station BS through which the mobile terminal MT is allowed to access the wireless cellular telecommunication network.

For example, the white list of the mobile terminal MT1 identifies the base stations BS 1 and BS4 and the white list of the mobile terminal MT2 identifies the base station BS1.

For example, a base station BS is identified in a white list of a mobile terminal MT when the base station BS belongs to the owner of the mobile terminal MT or when the base station BS belongs to the family or friends of the owner of the mobile terminal MT.

When a base station BS is identified in the white list of a mobile terminal MT, the mobile terminal MT can recognize signals transferred by the base station BS.

When a base station BS is not identified in the white list of a mobile terminal MT, the mobile terminal MT can not recognize signals transferred by the base station BS or does not consider them.

The base station BS1 is located in the area AR1, the base station BS2 is located in the area AR2 and is not identified in the white list of the mobile terminals MT1 and MT2. The base station BS3 is located in the area AR3 and is not identified in the white list of the mobile terminals MT1 and MT2.

When the base station BS1 is operational, the signals transferred by the base station BS1 are received by any mobile terminal MT located in the area AR1 or AR2.

When the base station BS2 is operational, the signals transferred by the base station BS2 are received by any mobile terminal MT located in the area AR1 or AR2.

When the base station BS3 is operational, the signals transferred by the base station BS3 are received by any mobile terminal MT located in the area AR1 or AR3.

When the base station BS4 is operational, the signals transferred by the base station BS4 are not received by any mobile terminal MT located in the area AR1, AR2 or AR3.

The mobile terminals MT1 and MT2 located in the area AR1 can then receive the signals transferred by the base stations BS1, BS2 and BS3 when the base stations BS are operational.

The areas AR1, AR2 and AR3 are for example apartments in a building.

Each base station BS1, BS2, BS3 and BS4 is connected to a core network device CN of the wireless cellular telecommunication network through a telecommunication network not shown in Fig. 1.

The base station BS 1 is linked to the core network device CN through the link S1₁ established on the telecommunication network.

The base station BS2 is linked to the core network device CN through the link S1₂ established on the telecommunication network.

The base station BS3 is linked to the core network device CN through the link S1₃ established on the telecommunication network.

The base station BS4 is linked to the core network device CN through the link S1₄ established on the telecommunication network.

The base station BS 1 may be linked to the base station BS2 through the link X2₁₂ established on the telecommunication network.

The base station BS1 may be linked to the base station BS3 through the link X2₁₃ established on the telecommunication network.

The base station BS2 may be linked to the base station BS3 through the link X2₂₃ established on the telecommunication network.

The base stations BS1, BS2, BS3 may be linked to the base station BS4 through a respective link not shown in Fig. 1 established on the telecommunication network.

When the base station BS 1 is not operational, for example when the base station BS1 is powered off, broken, is in an operating mode wherein the base station BS1 does not transfer signals identifying the base station BS1, or disconnected from the telecommunication network, the mobile terminal MT1, located in the area AR1, cannot access the wireless cellular telecommunication network through another base station BS2, BS3 or BS4. The base stations BS2 and BS3 are not identified in the white list of the mobile terminal MT1 and the mobile terminal MT1 is too far from the base station BS4. The mobile terminal MT2, located in the area AR1, cannot access the wireless cellular telecommunication network through another base station BS2, BS3 or BS4. The base stations BS2, BS3 and BS4 are not identified in the white list of the mobile terminal MT2.

When a mobile terminal MT accesses the wireless cellular telecommunication network, the mobile terminal MT can establish or receive a communication with a remote telecommunication device and/or can download data.

Information identifying a base station BS may identify uniquely the base station BS among all the base stations BS of the wireless cellular telecommunication network or may identify uniquely the base station BS among a limited number of base stations BS of the wireless cellular telecommunication network, for example the base stations BS located within a given area.

The information identifying a base station BS enables the mobile terminal MT to recognize signals transferred by the base station BS. The information identifying a base station BS may also be, for example, reference signals used for channel estimation between the base station BS and the mobile terminal MT.

When a base station BS is not identified in the white list of a mobile terminal MT, the mobile terminal MT can not or does not detect the signals transferred by that base station BS.

According to the invention, the core network device CN detects when a base station BS, located in the vicinity of a mobile terminal MT and identified in the white list of the mobile terminal MT, is not operational.

In that case, the core network device CN requests a base station BS that is not identified in the white list of the mobile terminal MT to transfer signals that should be transferred by one base station BS identified in the white list of the mobile terminal MT.

According to the invention, one base station BS which is not identified in the white list of a mobile terminal MT:
- receives, from the core network device, a message requesting the base station to transfer signals that should be transferred by one base station BS identified in the white list of the mobile terminal MT,
- obtains information identifying the base station BS identified in the white list of the mobile terminal MT,
- broadcasts signals identifying the base station BS identified in the white list of the mobile terminal MT,
- transfers to the mobile terminal MT signals that should be transferred by the base station BS identified in the white list of the mobile terminal MT, the signals being for example signals representative of data related to a communication in which the mobile terminal is involved,
- receives signals from the mobile terminal MT, the signals being intended for the base station BS identified in the white list of the mobile terminal MT.

Preferably, the base station BS which is not identified in the white list of the mobile terminal MT,
- broadcasts signals identifying the base station which is not identified in the white list of the mobile terminal MT,
- transfers signals to another mobile terminal MT,
- receives signals from the other mobile terminal MT, the signals being intended for the base station BS which is not identified in the white list of the mobile terminal MT.

The broadcasted signals identifying the base stations are preferably broadcasted in a synchronous manner.

A broadcasting channel is a channel which is common to all mobile terminals MT or to at least two mobile terminals MT for receiving signals from a base station BS.

Broadcasting is understood as a transmission to at least two mobile terminals MT which are known or not by the base station BS.

According to the invention, the core network device :
- determines if one base station identified in the white list of the mobile terminal MT that should transfer signals to the mobile terminal is not operational,
- transfers a message requesting the base station which is not identified in the white list of the mobile terminal MT to transfer signals that should be transferred by one of the base station of which information enabling the identification of signals transferred by the first base station are comprised in the list if the base station that should transfer signals to the mobile terminal is not operational,
- allows the mobile terminal to access to the wireless cellular telecommunication network through the base station which transfers signals that should be transferred by one of the base station of which information enabling the identification of signals transferred by the base station are comprised in the list.

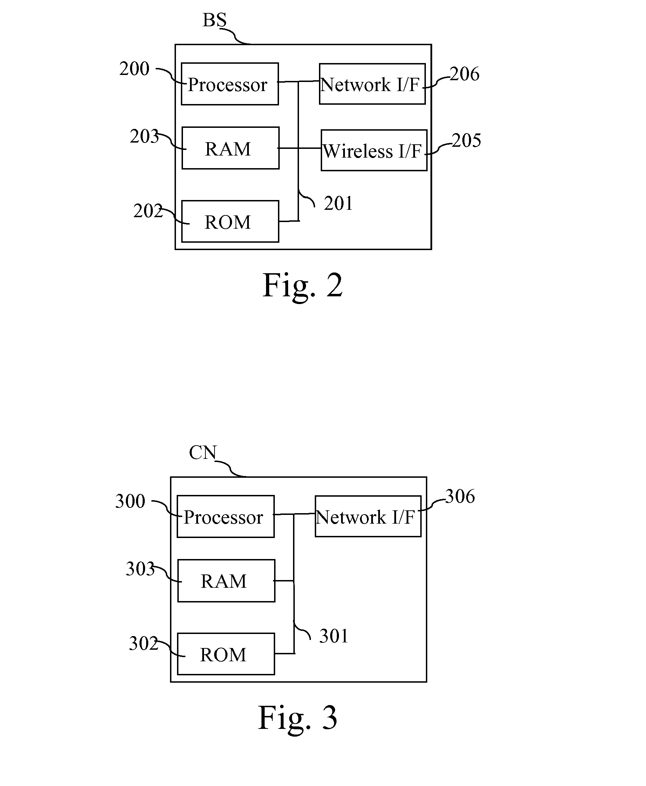

**Fig. 2** is a diagram representing the architecture of a base station in which the present invention is implemented.

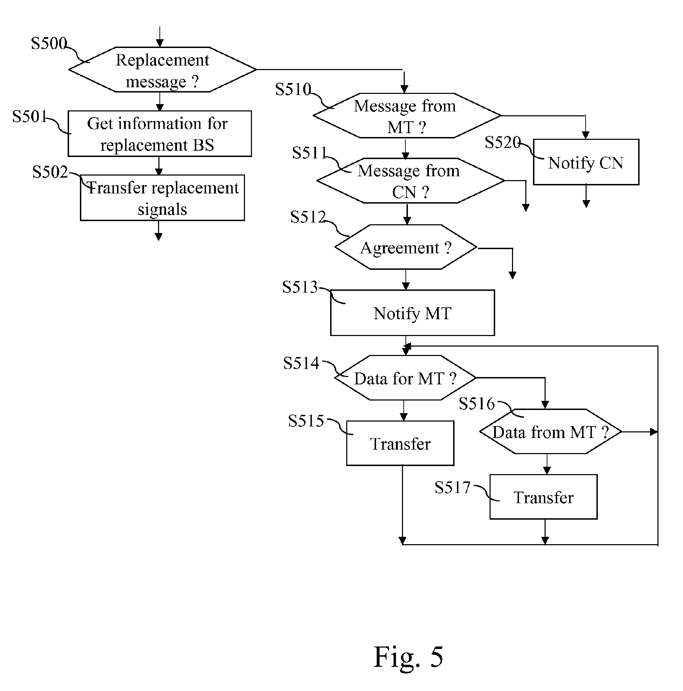

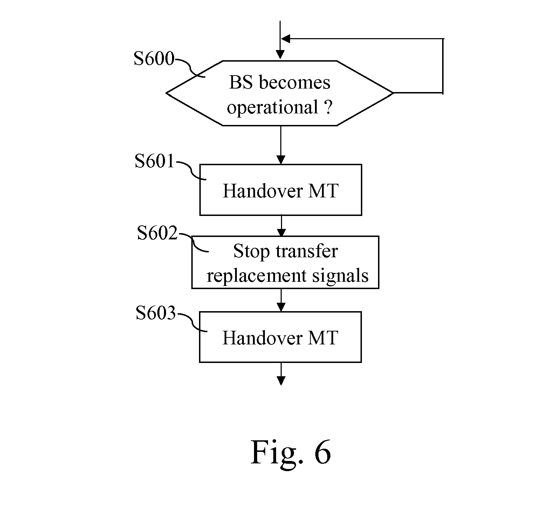

The base station BS has, for example, an architecture based on components connected together by a bus 201 and a processor 200 controlled by the program as disclosed in Figs. 5 and 6.

The bus 201 links the processor 200 to a read only memory ROM 202, a random access memory RAM 203, a wireless interface 205 and a network interface 206.

The memory 203 contains registers intended to receive variables and the instructions of the programs related to the algorithms as disclosed in Figs. 5 and 6.

The memory 203 may comprise information identifying each base station BS which is identified in the white list of each mobile terminal MT.

The processor 200 controls the operation of the network interface 206 and of the wireless interface 205.

The read only memory 202 contains instructions of the programs related to the algorithms as disclosed in Figs. 5 and 6, which are transferred, when the base station BS is powered on, to the random access memory 203.

The base station BS may be connected to a telecommunication network through the network interface 206. For example, the network interface 206 is a DSL (Digital Subscriber Line) modem, or an ISDN (Integrated Services Digital Network) interface, etc. Through the network interface 206, the base station BS may transfer messages to the core network device CN or to other base stations BS or may receive messages from other base stations BS or from the core network device CN.

The messages are transferred through links S 1 or X2 established on the telecommunication network between the base station BS and the core network device CN or between the base stations BS and other base stations BS.

The wireless interface 205 and the network interface 206 are the resources of the base station BS used by a mobile terminal MT in order to access the wireless telecommunication network when the mobile terminal MT establishes or receives a communication with a remote telecommunication device.

The wireless interface 205 comprises means for transferring signals identifying the base station BS and/or identifying another base station BS.

The wireless interface 205 comprises means for transferring signals to the mobile terminal MT that should be transferred by the base station BS identified in the white list of the mobile terminal MT and which is not operational.

The wireless interface 205 comprises means for receiving signals from the mobile terminal, the signals being intended for the base station BS identified in the white list of the mobile terminal MT and which is not operational.

**Fig. 3** is a diagram representing the architecture of a core network device in which the present invention is implemented.

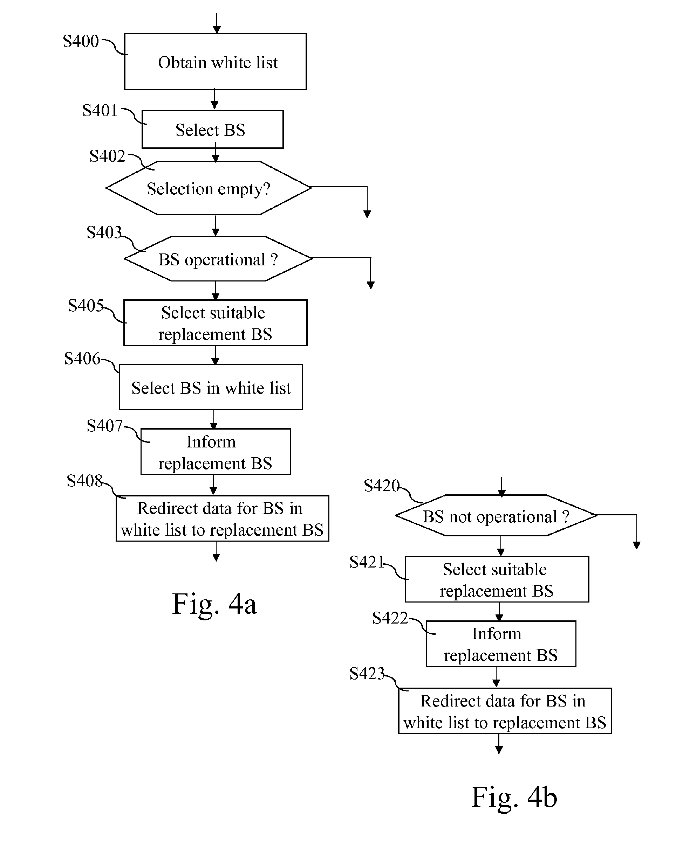

The core network device CN has, for example, an architecture based on components connected together by a bus 301 and a processor 300 controlled by the programs as disclosed in Figs. 4a and 4b.

The bus 301 links the processor 300 to a read only memory ROM 302, a random access memory RAM 303 and a network interface 306.

The memory 303 contains registers intended to receive variables and the instructions of the programs related to the algorithms as disclosed in Figs. 4a and 4b.

The memory 303 may comprise the white list of each mobile terminal MT.

The processor 300 controls the operation of the network interface 306.

The read only memory 302 contains instructions of the programs related to the algorithms as disclosed in Figs. 4a and 4b, which are transferred, when the core network device CN is powered on, to the random access memory 303.

The core network device CN may be connected to a telecommunication network not shown in Fig. 1 through the network interface 306. For example, the network interface 306 is a DSL (Digital Subscriber Line) modem, or an ISDN (Integrated Services Digital Network) interface, etc. Through the network interface 306, the core network device CN may transfer or receive messages to at least one base station BS.

Messages are transferred through links S 1 established on the telecommunication network between the core network device CN and the base stations BS.

**Fig. 4a** discloses an example of an algorithm executed by a core network device according to the present invention for each mobile terminal located in the area managed by the core network device.

More precisely, the present algorithm is executed by the processor 300 of the core network device CN for each mobile terminal MT located in the area managed by the core network device CN.

At step S400, the processor 300 obtains the white list of a mobile terminal MT, for example the white list of the mobile terminal MT1.

The processor 300 gets the white list of the mobile terminal MT1 using, for example, the identifier of the mobile terminal MT1 as a key in a database comprising the white list of each mobile terminal MT1.

At next step S401, the processor 300 selects a list of base stations BS which is a subset of the white list of the mobile terminal MT1.

The processor 300 selects the base station or base stations BS by selecting among the at least one base station BS identified in the white list of the mobile terminal MT1, the base station or base stations BS which is or are located in the vicinity of the mobile terminal MT1. In that case, the processor 300 selects the base station BS1.

At next step S402, the processor 300 checks if the list of base stations BS built at step S401 is empty.

If the list built at step S401 is empty, the processor 300 interrupts the present algorithm, selects another mobile terminal MT, for example the mobile terminal MT2, and executes the present algorithm for the new selected mobile terminal MT2.

Otherwise, the processor 300 moves to step S403.

At step S403, the processor 300 checks if at least one base station BS in the list of base stations BS built at step S401 is operational. For example, the processor 300 checks if the base station BS 1 is operational.

The processor 300 may check if the base station or base stations BS in the list of base stations BS built at step S401 is or are operational by checking if the base station or base stations BS responds or respond to a message or signal transferred by the core network device CN.

The processor 300 may check if the base station or base stations BS in the list of base stations BS built at step S401 is or are operational by checking if the link S1 between that base station or these base stations BS and the core network device CN is operational.

If at least one base station BS in the list of base stations BS built at step S401 is operational, the processor 300 interrupts the present algorithm, selects another mobile terminal MT2 and executes the present algorithm for the new selected mobile terminal MT.

If none of the base stations BS in the list of base stations BS built at step S401 is operational, the processor 300 moves to step S405.

At step S405, the processor 300 selects one suitable base station BS which may replace the base station BS identified in the white list which is located in the vicinity of the mobile terminal MT1 and which is not operational.

The processor 300 selects, among the base stations BS which are neighbours of the base stations BS of the list formed at step S401, the base station BS which transfers the signals which may be received by the mobile terminal MT1 with the highest power strength among the signals transferred by other base stations BS and/or selects, among the base stations BS which are neighbours of the base stations BS of the list formed at step S401, the base station BS which has the lowest working load and/or selects, among the base stations BS which are neighbours of the base stations BS of the list formed at step S401, the base station BS which transfers the signals which may be received by the mobile terminal MT with the highest quality.

At next step S406, the processor 300 selects among the base stations BS of the white list of the mobile terminal MT1, the base station BS which transfers signals identifying the base station BS which are as orthogonal as possible to the ones of the base station BS selected at step S405.

At next step S407, the processor 300 commands the transfer of a message to the base station BS selected at step S405 notifying the base station BS that the base station BS has to transfer signals identifying another base station, i.e. the base station BS selected at step S406.

The information identifying the base station BS selected at step S406 and other information needed by the mobile terminal MT1 in order to be able to decode a message sent by the base station BS selected at step S406 may also be transferred by the core network device CN to the base station BS selected at step S405.

For example, the base station BS2 may be selected at step S405 and the base station BS selected at step S406 is the base station BS1 which is not operational.

For example, the base station BS2 may be selected at step S405 and the base station BS selected at step S406 is the base station BS4 that transfers signals identifying the base station BS4 which are the most orthogonal to the one of the base station BS2.

At the same step, the processor 300 commands the transfer to the base station BS2 selected at step S405 of a message notifying the base station BS2 that the base station BS2 has to transfer signals to the mobile terminal MT that should be transferred by the base station BS selected at step S406.

At the same step, the processor 300 commands the transfer of a message to the base station BS2 selected at step S405 notifying the base station BS2 that the base station BS2 has to process signals received from the mobile terminal MT, the signals being intended for the base station BS selected at step S406.

It has to be noted here that the signals identifying the base station BS1 selected at step S406 and the signals that should be transferred to the mobile terminal MT by the base station BS selected at step S406 may be transferred at the same time as signals identifying the base station BS2 selected at step S405 and signals transferred by the base station BS2 selected at step S405 to mobile terminals MT in the white list of which the base station BS2 selected at step S405 is identified.

Similarly, the signals received from the mobile terminal MT, intended for the base station BS selected at step S406 may be received at the same time as the signals received from mobile terminals MT in the white list of which the base station BS2 selected at step S405 is identified.

At next step S408, the processor 300 allows the mobile terminal MT to access to the wireless cellular telecommunication network through the base station BS selected at step S405.

The processor 300 redirects the data that should be transferred to the base station BS selected at step S406 to the base station BS selected at step S405.

After that, the processor 300 interrupts the present algorithm, selects another mobile terminal MT and executes the present algorithm for the new selected mobile terminal MT.

**Fig. 4b** discloses an example of an algorithm executed by a core network device according to a variant of realisation of the present invention for at least a part of the base stations BS located in the area managed by the core network device.

More precisely the present algorithm is executed by the processor 300 of the core network device CN.

At step S420, the processor 300 checks if there is one base station BS located in the area the core network device CN manages which is not operational.

If no base station BS is not operational, the processor returns to step S420.

If one base station BS is not operational, the processor 300 moves to step S421.

For example, the base station BS1 is not operational.

At step S421, the processor 300 selects at least one suitable base station BS which may replace the base station BS 1 which is not operational.

For example, the processor 300 selects one suitable base station BS which may replace the base station BS 1 which is not operational for the mobile terminal MT or mobile terminals of which the base station BS1 is identified in its or their white list.

For example, the processor 300 selects for each mobile terminal MT of which the base station BS 1 is identified in its white list one suitable base station BS which may replace the base station BS1. The selected base stations BS may be different for different mobile terminals MT.

At next step S422, the processor 300 commands the transfer of a message to the base station BS or base stations BS selected at step S421 notifying the base station BS that the base station BS has to transfer signals identifying another base station.

When a single base station BS is selected at step S421, the signals identifying another base station are signals identifying the base station BS which is not operational or one base station BS identified in the white list of the mobile terminal MT.

When plural base stations BS are selected at step S421, each selected base station BS transfers signals identifying a respective base station identified in the white list of the mobile terminal MT.

At next step S423, the processor 300 allows the mobile terminal MT to access the wireless cellular telecommunication network through the base station BS selected at step S421 or one of the base stations BS selected at step S421.

The processor 300 redirects the data that should be transferred to the base station BS which is not operational to the base station BS selected at step S421 or one of the base stations BS selected at step S421.

After that, the processor 300 returns to step S420.

It has to be noted here that, in a variant, the present algorithm is executed for each base station BS without considering if the base station BS is operational or not.

**Fig. 5** discloses an example of an algorithm executed by a base station according to the present invention.

More precisely, the present algorithm is executed by the processor 200 of each base station BS.

For example, the present algorithm is executed by the processor 200 of the base station BS2.

At step S500, the processor 200 checks if a message notifying the base station BS2 that the base station BS2 has to transfer signals identifying another base station BS is received.

That message is the one transferred by the core network device CN at step S407 of the algorithm of the Fig. 4a or at step S422 of the algorithm of the Fig. 4b.

If a message notifying the base station BS2 that the base station BS2 has to transfer signals identifying another base station is received, the processor 200 moves to step S501. Otherwise, the processor 200 moves to step S510.

At step S501, the processor 200 gets information identifying the other base station BS.

The other base station BS may be the base station BS that the base station BS2 has to replace when the other base station BS is not operational, or a base station BS which is identified in the white list of the mobile terminal MT which should connect to the base station BS which the base station BS2 has to replace.

The information identifying the base station BS, for example the base station BS1 that the base station BS2 has to replace may be comprised in the message received at step S500 or memorized in the RAM memory 203.

The information identifying the base station BS 1 may identify uniquely the base station BS1 among all the base stations BS of the wireless cellular telecommunication network or may identify uniquely the base station BS1 among a limited number of base stations BS of the wireless cellular telecommunication network, for example the base stations BS located within a given area.

The information identifying the base station BS1 identified in the white list of the mobile terminal MT enables the mobile terminal MT to recognize signals transferred by the base station BS1 and/or enables the synchronisation of the mobile terminal MT1 on the signals transferred by the base station BS1. The information identifying the base station BS 1 identified in the white list of the mobile terminal MT may also be, for example, reference signals used for the estimation of the channel between the base station BS1 and the mobile terminal MT.

At next step S502, the processor 200 commands the wireless interface 205 to broadcast periodically signals identifying the base station BS1 identified in the white list of the mobile terminal MT.

The signals identifying the base station BS1 identified in the white list of the mobile terminal MT may be synchronization signals corresponding to the cell identifier of the base station BS1 identified in the white list of the mobile terminal MT and system information.

The signals identifying the base station BS1 identified in the white list of the mobile terminal MT may be transferred on the same radio resources as the ones identifying the base station BS2.

These signals may be under the form of frames composed of symbols and may be transferred in a synchronous manner at the frame and/or symbol level, i.e., the signals identifying the base station BS1 identified in the white list of the mobile terminal MT may be synchronized at the frame and/or symbol level with the signals identifying the base station BS2.

After that the processor 200 returns to step S500.

At step S510, the processor 200 checks if a message intended for the base station BS1 identified in the white list of the mobile terminal MT is received from a mobile terminal MT.

If a message intended for the base station BS 1 identified in the white list of the mobile terminal MT is received from a mobile terminal MT, the processor 200 moves to step S520. Otherwise, the processor 200 moves to step S511.

At step S520, the processor 200 commands the transfer of the received message to the core network device CN.

After that the processor 200 returns to step S500.

At step S511, the processor 200 checks if a message is received from the core network device CN.

If a message is received from the core network device CN, the processor 200 moves to step S512. Otherwise, the processor 200 returns to step S500.

At step S512, the processor 200 checks if the message allows the mobile terminal MT to access the wireless cellular telecommunication network through the base station BS2.

If the message allows the mobile terminal MT to access the wireless cellular telecommunication network through the base station BS2, the processor 200 moves to step S513. Otherwise, if a message is received from the core network device CN refusing that the mobile terminal MT accesses the wireless cellular telecommunication network through the base station BS2, the processor 200 returns to step S200.

At step S513, the processor 200 transfers a message to the mobile terminal MT notifying it that it is allowed to access the wireless cellular telecommunication network. The mobile terminal MT accesses the wireless cellular telecommunication network through the base station BS2 as if the mobile terminal MT accessed the wireless cellular telecommunication network through the base station BS1.

The effective use of the resources of the base station BS2 by the mobile terminal MT is unknown by the mobile terminal MT.

At next step S514, the processor 200 checks if data to be transferred to the mobile terminal MT are received through the network interface 206.

If data to be transferred to the mobile terminal MT are received through the network interface 206, the processor 200 moves to step S515. Otherwise, the processor 200 moves to step S516.

Data are for example related to a communication in which the mobile terminal MT is involved.

At step S515, the processor 200 commands the wireless interface 205 to transfer signals comprising data received at step S514 to the mobile terminal MT. These signals should be transferred by the base station BS identified at step S501 and are transferred in the same way as the base station identified at step S501 should do.

It has to be noted here that the signals identifying the base station BS identified at step S501 and the signals to the mobile terminal MT that should be transferred by the base station BS identified at step 5501 may be transferred at the same time as the signals identifying the second base station BS2 and/or the signals transferred by the base station BS2 to mobile terminals MT in the white list of which the base station BS2 selected at step S405 is identified.

These signals may be under the form of frames composed of symbols and may be transferred in a synchronous manner at the frame and/or symbol level.

For instance, the signals that should be transferred by the base station BS identified at step S501 to the mobile terminal MT may be synchronized at the frame and/or symbol level with the signals transferred by the base station BS2 to mobile terminals MT in the white list of which the base station BS2 selected at step S405 is identified.

After that, the processor 200 returns to step S514.

At step S516, the processor 200 checks if data to be transferred to the communication network are received from the mobile terminal MT through the wireless interface 205.

If data to be transferred to the communication network are received from the mobile terminal MT through the wireless interface 205, the processor 200 moves to step S517. Otherwise, the processor 200 moves to step S514.

At step S517, the processor 200 commands the network interface 206 to transfer data received at step S517 to the communication network. These data should be received by the base station BS identified at step S501.

Similarly, the signals received from the mobile terminal MT, intended for the base station BS identified at step S501, may be received at the same time as the signals received from mobile terminals MT in the white list of which the base station BS is.

After that the processor 200 returns to step S514.

It has to be noted here that when the base station is a full duplex base station BS2, the steps S514 and 5515 are executed in parallel with the steps S516 and S517.

**Fig. 6** discloses an example of an algorithm executed by a base station according to the present invention when another base station replaced by the base station becomes operational.

More precisely, the present algorithm is executed by the processor 200 of each base station BS.

For example, the present algorithm is executed by the processor 200 of the base station BS2 when the base station BS2 transfers signals that should be transferred by the base station BS 1 identified in the white list of the mobile terminal.

At step S600, the processor 200 checks if the base station BS, i.e. the base station BS1, which was not operational becomes operational.

The processor 200 may check if the base station BS 1 is operational by checking if the base station BS 1 responds to a message transferred by the core network device CN or the base station BS2.

The processor 200 may check if the base station BS 1 is operational by checking if the link X2 between the base station BS 1 and the base station BS2 is operational.

If the base station BS1 is operational, the processor 200 moves to step S601. Otherwise, the processor 200 returns to step S600.

At step S601, a handover is performed for the mobile terminal MT to which the base station BS2 transfers signals that should be transferred by the base station BS1.

The base station BS2, using signals that should be transferred by the base station BS identified at step S501, notifies the mobile terminal MT to which the base station BS2 transfers signals that should be transferred by the base station BS1 that it has to proceed to a handover from the base station BS1 identified at step S501 to the base station BS2.

At next step S602, the base station BS2 stops to transfer signals that should be transferred by the base station BS1 to the mobile terminal MT, stops to receive signals intended for the base station BS1 from the mobile terminal MT.

At step S603, a handover is performed for the mobile terminal MT to which the base station BS2 used to transfer signals that should have been transferred by the base station BS1.

The base station BS2 notifies the mobile terminal MT to which the base station BS2 used to transfer signals that should have been transferred by the base station BS 1 that it has to proceed to a handover from the base station BS2 to the base station BS1.

After that, the processor 200 interrupts the present algorithm.

Naturally, many modifications can be made to the embodiments of the invention described above without departing from the scope of the present invention.

## Claims

1. Method for enabling a mobile terminal (MT1, MT2) to access a wireless cellular telecommunication network comprising plural base stations (BS1, BS2, BS3, BS4) and a core network device (CN), the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, **characterised in that** the method comprises the steps, executed by one second base station, of:
- receiving (S500), from the core network device, a message requesting the second base station to transfer signals that should be transferred by one first base station which is not operational,
- obtaining (S501) information identifying the first base station,
- broadcasting (S502)signals identifying the first base station,
- transferring (S515) signals that should be transferred by the first base station which is not operational to the mobile terminal,
- receiving signals from the mobile terminal, the signals being intended for the first base station.

2. Method according to claim 1, **characterized in that** the method comprises further steps executed by the second base station of:
- broadcasting signals identifying the second base station,
- transferring signals to another mobile terminal,
- receiving signals from the other mobile terminal, the signals being intended for the second base station.

3. Method according to claim 2, **characterised in that** the broadcasted signals identifying the first base station are under the form of at least one first symbol of at least one first frame and the broadcasted signals identifying the second base station are under the form of at least one second symbol of at least one second frame and **in that** said first and second frames are synchronized or said first and second symbols are synchronized or said first and second frames and said first and second symbols are synchronized.

4. Method according to claim 2, **characterised in that** the signals that should be transferred by the first base station to the mobile terminal are under the form of at least one first symbol of at least one first frame and the signals transferred by the second base station to the other mobile terminal are under the form of at least one second symbol of at least one second frame and **in that** said first and second frames are synchronized or said first and second symbols are synchronized or said first and second frames and said first and second symbols are synchronized.

5. Method for enabling a mobile terminal to access a wireless cellular telecommunication network comprising plural base stations and a core network device, the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, **characterised in that** the method comprises the steps, executed by the core network device, of :
- determining (S420) if one first base station that should transfer signals to the mobile terminal is not operational,
- transferring (S422) a message requesting the second base station to transfer signals that should be transferred by one of the first base stations of which information enabling the identification of signals transferred by the first base station is comprised in the list, for identifying said first base station and if the first base station that should transfer signals to the mobile terminal is not operational,
- allowing (S423) the mobile terminal to access the wireless cellular telecommunication network through the second base station which transfers signals that should be transferred by one of the first base stations of which information enabling the identification of signals transferred by the first base station is comprised in the list.

6. Method according to claim 5, **characterised in that** the signals that should be transferred by one first base station are the signals that should be transferred by the first base station which is not operational.

7. Method according to claim 5, **characterised in that** the signals that should be transferred by one first base station are the signals that should be transferred by one first base station which is different from the base station which is not operational.

8. Method according to any of the claims 5 to 7, **characterised in that** the second base station further transfer signals representative of data related to a communication in which the mobile terminal is involved.

9. Method according to any of the claims 5 to 8, **characterised in that** the method comprises further step of selecting the first base station that should transfer the signals among the first base stations of which information enabling the identification of signals transferred by the first base station is comprised in the list, the selected first base station being the first base station which transfers signals identifying the first base station which are as orthogonal as possible to the ones identifying the second base station and transferred by the second base station.

10. Device for enabling a mobile terminal to access a wireless cellular telecommunication network comprising plural base stations and a core network device, the mobile terminal being allowed to access the wireless cellular telecommunication network through at least one first base station of which information enabling the identification of signals transferred by the at least one first base station is memorized by the mobile terminal, the mobile terminal not memorizing information enabling the identification of signals transferred by a second base station, **characterised in that** the device for enabling a mobile terminal to access a wireless cellular telecommunication network is included in the second base station and comprises :
- means for receiving, from the core network device, a message requesting the second base station to transfer signals that should be transferred by one first base station which is not operational,
- means for obtaining information identifying the first base station,
- means for broadcasting signals identifying the first base station,
- means for transferring signals that should be transferred by the first base station which is not operational to the mobile station,
- means for receiving signals from the mobile terminal, the signals being intended for the first base station.

11. Device for enabling a mobile terminal to access a wireless cellular telecommunication network comprising plural base stations and a core network device, the mobile terminal being allowed to access the wireless cellular telecommunication network through at least one first base station, the mobile terminal memorizing a list comprising information enabling the identification of signals transferred by each first base station, the mobile terminal not memorizing information enabling the identification of signals transferred by second base stations, **characterised in that** the device for enabling a mobile terminal to access the wireless cellular telecommunication network is included in the core network device and comprises :
- means for determining if one first base station that should transfer signals to the mobile terminal is not operational,
- means for transferring a message requesting the second base station to transfer signals that should be transferred by one of the first base stations of which information enabling the identification of signals transferred by the first base station is comprised in the list for identifying said first base station and if the first base station that should transfer signals to the mobile terminal is not operational,
- means for allowing the mobile terminal to access to wireless cellular telecommunication network through the second base station which transfers signals that should be transferred by one of the first base stations of which information enabling the identification of signals transferred by the first base station is comprised in the list.

12. Computer program which can be directly loadable into a programmable device, comprising instructions or portions of code for implementing the steps of the method according to claim 1 to 4, when said computer program is executed on a programmable device.

13. Computer program which can be directly loadable into a programmable device, comprising instructions or portions of code for implementing the steps of the method according to claims 5 to 9, when said computer program is executed on a programmable device.

## Patentansprüche

1. Verfahren zum Ermöglichen, dass ein mobiles Endgerät (MT1, MT2) auf ein drahtloses zellulares Telekommunikationsnetzwerk mit mehreren Basisstationen (BS1, BS2, BS3, BS4) und einer Kernnetzwerkvorrichtung (CN) zugreift, wobei dem mobilen Endgerät erlaubt wird, auf das drahtlose zellulare Telekommunikationsnetzwerk über wenigstens eine erste Basisstation zuzugreifen, wobei sich das mobile Endgerät eine Liste mit Information merkt, die die Identifikation von durch jede erste Basisstation transferierten Signalen ermöglicht, wobei sich das mobile Endgerät Information nicht merkt, die die Identifikation von durch zweite Basisstationen transferierten Signalen ermöglicht, **dadurch gekennzeichnet, dass** das Verfahren die folgenden durch eine zweite Basisstation ausgeführten Schritte aufweist:
- Empfangen (S500) einer Nachricht von der Kernnetzwerkvorrichtung, welche Nachricht die zweite Basisstation auffordert, Signale zu transferieren, die durch eine erste Basisstation transferiert werden sollten, die nicht in Betrieb ist,
- Erhalten (S501) von Information, die die erste Basisstation identifiziert,
- Ausstrahlen (S502) von Signalen, die die erste Basisstation identifizieren,
- Transferieren (S515) von Signalen, die durch die erste Basisstation transferiert werden sollten, die nicht in Betrieb ist, zu dem mobilen Endgerät,
- Empfangen von Signalen von dem mobilen Endgerät, wobei die Signale für die erste Basisstation beabsichtigt sind.

2. Verfahren nach Anspruch 1, **dadurch gekennzeichnet, dass** das Verfahren folgende durch die zweite Basisstation ausgeführte weitere Schritte aufweist:
- Ausstrahlen von Signalen, die die zweite Basisstation identifizieren,
- Transferieren von Signalen zu einem anderen mobilen Endgerät,
- Empfangen von Signalen von dem anderen mobilen Endgerät, wobei die Signale für die zweite Basisstation beabsichtigt sind.

3. Verfahren nach Anspruch 2, **dadurch gekennzeichnet, dass** die ausgestrahlten Signale, die die erste Basisstation identifizieren, in der Form von wenigstens einem ersten Symbol von wenigstens einem ersten Frame sind und die ausgestrahlten Signale, die die zweite Basisstation identifizieren, in der Form von wenigstens einem zweiten Symbol von wenigstens einem zweiten Frame sind, und dass die ersten und zweiten Frames synchronisiert sind oder die ersten und zweiten Symbole synchronisiert sind oder die ersten und zweiten Frames und die ersten und zweiten Symbole synchronisiert sind.

4. Verfahren nach Anspruch 2, **dadurch gekennzeichnet, dass** die Signale, die durch die erste Basisstation zu dem mobilen Endgerät transferiert werden sollten, in der Form von wenigstens einem ersten Symbol von wenigstens einem ersten Frame sind und die durch die zweite Basisstation zu dem anderen mobilen Endgerät transferierten Signale in der Form von wenigstens einem zweiten Symbol von wenigstens einem zweiten Frame sind und dass die ersten und zweiten Frames synchronisiert sind oder die ersten und zweiten Symbole synchronisiert sind oder die ersten und zweiten Frames und die ersten und zweiten Symbole synchronisiert sind.

5. Verfahren zum Ermöglichen, dass ein mobiles Endgerät auf ein drahtloses zellulares Telekommunikationsnetzwerk mit mehreren Basisstationen und einer Kernnetzwerkvorrichtung zugreift, wobei dem mobilen Endgerät erlaubt wird, auf das drahtlose zellulare Telekommunikationsnetzwerk über wenigstens eine erste Basisstation zuzugreifen, wobei sich das mobile Endgerät eine Liste mit Information merkt, die die Identifikation von durch jede erste Basisstation transferierten Signalen ermöglicht, wobei sich das mobile Endgerät Information nicht merkt, die die Identifikation von durch zweite Basisstationen transferierten Signalen ermöglicht, **dadurch gekennzeichnet, dass** das Verfahren folgende durch die Kernnetzwerkvorrichtung ausgeführte Schritte aufweist:
- Bestimmen (S420), ob eine erste Basisstation, die Signale zu dem mobilen Endgerät transferieren sollte, nicht in Betrieb ist,
- Transferieren (S422) einer Nachricht, die die zweite Basisstation auffordert, Signale zu transferieren, die durch eine der ersten Basisstationen transferiert werden sollten, von welcher Information, die die Identifikation von durch die erste Basisstation transferierten Signalen ermöglicht, in der Liste umfasst ist, zum Identifizieren der ersten Basisstation und ob die erste Basisstation, die Signale zu dem mobilen Endgerät transferieren sollte, nicht in Betrieb ist,
- Erlauben (S423), dass das mobile Endgerät auf das drahtlose zellulare Telekommunikationsnetzwerk über die zweite Basisstation zugreift, die Signale transferiert, die durch eine der ersten Basisstationen transferiert werden sollten, von welcher Information, die die Identifikation von durch die erste Basisstation transferierten Signalen ermöglicht, in der Liste umfasst ist.

6. Verfahren nach Anspruch 5, **dadurch gekennzeichnet, dass** die Signale, die durch eine erste Basisstation transferiert werden sollten, die Signale sind, die durch die erste Basisstation transferiert werden sollten, die nicht in Betrieb ist.

7. Verfahren nach Anspruch 5, **dadurch gekennzeichnet, dass** die Signale, die durch eine erste Basisstation transferiert werden sollten, die Signale sind, die durch eine erste Basisstation transferiert werden sollten, die unterschiedlich von der Basisstation ist, die nicht in Betrieb ist.

8. Verfahren nach einem der Ansprüche 5 bis 7, **dadurch gekennzeichnet, dass** die zweite Basisstation weiterhin Signale transferiert, die Daten in Bezug auf eine Kommunikation darstellen, an welcher das mobile Endgerät beteiligt ist.

9. Verfahren nach einem der Ansprüche 5 bis 8, **dadurch gekennzeichnet, dass** das Verfahren einen weiteren Schritt zum Auswählen der ersten Basisstation, die die Signale transferieren sollte, unter den ersten Basisstationen aufweist, von welcher Information, die die Identifikation von durch die erste Basisstation transferierten Signalen ermöglicht, in der Liste umfasst ist, wobei die ausgewählte erste Basisstation die erste Basisstation ist, die Signale transferiert, die die erste Basisstation identifizieren, die so orthogonal wie möglich zu denjenigen sind, die die zweite Basisstation identifizieren und durch die zweite Basisstation transferiert sind.

10. Vorrichtung zum Ermöglichen, dass ein mobiles Endgerät auf ein drahtloses zellulares Telekommunikationsnetzwerk mit mehreren Basisstationen und einer Kernnetzwerkvorrichtung zugreift, wobei dem mobilen Endgerät erlaubt wird, auf das drahtlose zellulare Telekommunikationsnetzwerk über wenigstens eine erste Basisstation zuzugreifen, von welcher Information, die die Identifikation von durch die wenigstens eine erste Basisstation transferierten Signalen ermöglicht, durch das mobile Endgerät gemerkt wird, wobei sich das mobile Endgerät Information nicht merkt, die die Identifikation von durch zweite Basisstationen transferierten Signalen ermöglicht, **dadurch gekennzeichnet, dass** die Vorrichtung zum Ermöglichen, dass ein mobiles Endgerät auf ein drahtloses zellulares Telekommunikationsnetzwerk zugreift, in der zweiten Basisstation enthalten ist und folgendes aufweist:
- eine Einrichtung zum Empfangen einer Nachricht von der Kernnetzwerkvorrichtung, welche Nachricht die zweite Basisstation auffordert, Signale zu transferieren, die durch eine erste Basisstation transferiert werden sollten, die nicht in Betrieb ist,
- eine Einrichtung zum Erhalten von Information, die die erste Basisstation identifiziert,
- eine Einrichtung zum Ausstrahlen von Signalen, die die erste Basisstation identifizieren,
- eine Einrichtung zum Transferieren von Signalen, die durch die erste Basisstation transferiert werden sollten, die nicht in Betrieb ist, zu dem mobilen Endgerät,
- eine Einrichtung zum Empfangen von Signalen von dem mobilen Endgerät, wobei die Signale für die erste Basisstation beabsichtigt sind.

11. Vorrichtung zum Ermöglichen, dass ein mobiles Endgerät auf ein drahtloses zellulares Telekommunikationsnetzwerk mit mehreren Basisstationen und einer Kernnetzwerkvorrichtung zugreift, wobei dem mobilen Endgerät erlaubt wird, auf das drahtlose zellulare Telekommunikationsnetzwerk über wenigstens eine erste Basisstation zuzugreifen, wobei sich das mobile Endgerät eine Liste mit Information merkt, die die Identifikation von durch jede erste Basisstation transferierten Signalen ermöglicht, wobei sich das mobile Endgerät Information nicht merkt, die die Identifikation von durch zweite Basisstationen transferierten Signalen ermöglicht, **dadurch gekennzeichnet, dass** die Vorrichtung zum Ermöglichen, dass ein mobiles Endgerät auf ein drahtloses zellulares Telekommunikationsnetzwerk zugreift, in der Kernnetzwerkvorrichtung enthalten ist und folgendes aufweist:
- eine Einrichtung zum Bestimmen, ob eine erste Basisstation, die Signale zu dem mobilen Endgerät transferieren sollte, nicht in Betrieb ist,
- eine Einrichtung zum Transferieren einer Nachricht, die die zweite Basisstation auffordert, Signale zu transferieren, die durch eine der ersten Basisstationen transferiert werden sollten, von welcher Information, die die Identifikation von durch die erste Basisstation transferierten Signalen ermöglicht, in der Liste umfasst ist, zum Identifizieren der ersten Basisstation und ob die erste Basisstation, die Signale zu dem mobilen Endgerät transferieren sollte, nicht in Betrieb ist,
- eine Einrichtung zum Erlauben, dass das mobile Endgerät auf das drahtlose zellulare Telekommunikationsnetzwerk über die zweite Basisstation zugreift, die Signale transferiert, die durch eine der ersten Basisstationen transferiert werden sollten, von welcher Information, die die Identifikation von durch die erste Basisstation transferierten Signalen ermöglicht, in der Liste umfasst ist.

12. Computerprogramm, das direkt ladbar in eine programmierbare Vorrichtung sein kann und Anweisungen oder Teilbereiche eines Codes zum Implementieren der Schritte des Verfahrens nach Ansprüchen 1 bis 4 umfasst, wenn das Computerprogramm auf einer programmierbaren Vorrichtung ausgeführt wird.

13. Computerprogramm, das direkt ladbar in eine programmierbare Vorrichtung sein kann und Anweisungen oder Teilbereiche eines Codes zum Implementieren der Schritte des Verfahrens nach Ansprüchen 5 bis 9 umfasst, wenn das Computerprogramm auf einer programmierbaren Vorrichtung ausgeführt wird.

## Revendications

1. Procédé pour permettre à un terminal mobile (MT1, MT2) d'accéder à un réseau de télécommunication cellulaire sans fil comprenant plusieurs stations de base (BS1, BS2, BS3, BS4) et un dispositif de réseau central (CN), le terminal mobile étant autorisé à accéder au réseau de télécommunication cellulaire sans fil à travers au moins une première station de base, le terminal mobile mémorisant une liste comprenant des informations permettant l'identification des signaux transférés par chaque première station de base, le terminal mobile ne mémorisant pas d'informations permettant l'identification des signaux transférés par des secondes stations de base, **caractérisé en ce que** le procédé comporte les étapes, exécutées par une seconde station de base, de:
- réception (S500) du dispositif de réseau central, d'un message demandant à la seconde station de base de transférer des signaux qui devraient être transférés par une première station de base qui n'est pas opérationnelle,
- obtention (S501) d'informations identifiant la première station de base,
- diffusion (S502) de signaux identifiant la première station de base,
- transfert de signaux (S515) qui devraient être transférés par la première station de base qui n'est pas opérationnelle au terminal mobile,
- réception de signaux du terminal mobile, les signaux étant destinés à la première station de base.

2. Procédé selon la revendication 1, **caractérisé en ce que** le procédé comporte en outre les étapes exécutées par la seconde station de base de:
- diffusion de signaux identifiant la seconde station de base,
- transfert de signaux à un autre terminal mobile,
- réception de signaux de l'autre terminal mobile, les signaux étant destinés à la seconde station de base.

3. Procédé selon la revendication 2, **caractérisé en ce que** les signaux diffusés identifiant la première station de base sont sous la forme d'au moins un premier symbole d'au moins une première trame et les signaux diffusés identifiant la seconde station de base sont sous la forme d'au moins un second symbole d'au moins une seconde trame et **en ce que** lesdites première et seconde trames sont synchronisées ou lesdits premier et second symboles sont synchronisés ou lesdites première et seconde trames et lesdits premier et second symboles sont synchronisés.

4. Procédé selon la revendication 2, **caractérisé en ce que** les signaux qui devraient être transférés par la première station de base au terminal mobile sont sous la forme d'au moins un premier symbole d'au moins une première trame et les signaux transférés par la seconde la station de base à l'autre terminal mobile sont sous la forme d'au moins un second symbole d'au moins une seconde trame et **en ce que** lesdites première et seconde trames sont synchronisées ou lesdits premier et second symboles sont synchronisés ou lesdites première et seconde trames et lesdits premier et second symboles sont synchronisés.

5. Procédé pour permettre à un terminal mobile d'accéder à un réseau de télécommunication cellulaire sans fil comprenant plusieurs stations de base et un dispositif de réseau central, le terminal mobile étant autorisé à accéder au réseau de télécommunication cellulaire sans fil à travers au moins une première station de base et le terminal mobile mémorisant une liste comprenant des informations permettant l'identification des signaux transférés par chaque première station de base, le terminal mobile ne mémorisant pas d'informations permettant l'identification des signaux transférés par des secondes stations de base, **caractérisé en ce que** le procédé comprend les étapes, exécutées par le dispositif de réseau central, de:
- détermination (S420) si une première station de base qui devrait transmettre des signaux au terminal mobile n'est pas opérationnelle,
- transfert (S422) d'un message demandant à la seconde station de base de transférer des signaux qui devraient être transférés par l'une des premières stations de base dont les informations permettant l'identification des signaux transférés par la première station de base sont comprises dans la liste, pour identifier ladite première station de base et si la première station de base qui devrait transmettre des signaux au terminal mobile n'est pas opérationnelle,
- autorisation (S423) du terminal mobile d'accéder au réseau de télécommunication cellulaire sans fil à travers la seconde station de base qui transmet des signaux qui devraient être transférés par l'une des premières stations de base dont l'information permettant l'identification des signaux transférés par la première station de base est comprise dans la liste.

6. Procédé selon la revendication 5, **caractérisé en ce que** les signaux qui devraient être transférés par une première station de base sont les signaux qui doivent être transférés par la première station de base qui n'est pas opérationnelle.

7. Procédé selon la revendication 5, **caractérisé en ce que** les signaux qui devraient être transférés par une première station de base sont les signaux qui devraient être transférés par une première station de base qui est différente de la station de base qui n'est pas opérationnelle.

8. Procédé selon l'une quelconque des revendications 5 à 7, **caractérisé en ce que** la seconde station de base transfère en outre des signaux représentatifs de données relatives à une communication dans laquelle le terminal mobile est impliqué.

9. Procédé selon l'une quelconque des revendications 5 à 8, **caractérisé en ce que** le procédé comporte en outre l'étape de sélection de la première station de base qui devrait transférer les signaux parmi les premières stations de base dont les informations permettant l'identification des signaux transférés par la première station de base sont comprises dans la liste, la première station de base sélectionnée étant la première station de base qui transfère des signaux identifiant la première station de base qui sont aussi orthogonaux que possible à ceux identifiant la seconde station de base et transmis par la seconde station de base.

10. Dispositif pour permettre à un terminal mobile (MT1, MT2) d'accéder à un réseau de télécommunication cellulaire sans fil comprenant plusieurs stations de base (BS1, BS2, BS3, BS4) et un dispositif de réseau central (CN), le terminal mobile étant autorisé à accéder au réseau de télécommunication cellulaire sans fil à travers au moins une première station de base, le terminal mobile mémorisant une liste comprenant des informations permettant l'identification des signaux transférés par chaque première station de base, le terminal mobile ne mémorisant pas d'informations permettant l'identification des signaux transférés par des secondes stations de base, **caractérisé en ce que** le dispositif pour permettre à un terminal mobile d'accéder à un réseau de télécommunication cellulaire sans fil est compris dans la seconde station de base et comporte:
- des moyens de réception du dispositif de réseau central, d'un message demandant la seconde station de base de transférer des signaux qui devraient être transférés par une première station de base qui n'est pas opérationnelle,
- des moyens d'obtention d'informations identifiant la première station de base,
- des moyens de diffusion de signaux identifiant la première station de base,
- des moyens de transfert de signaux qui devraient être transférés par la première station de base qui n'est pas opérationnelle au terminal mobile,
- des moyens de réception de signaux du terminal mobile, les signaux étant destinés à la première station de base.

11. Dispositif pour permettre à un terminal mobile (MT1, MT2) d'accéder à un réseau de télécommunication cellulaire sans fil comprenant plusieurs stations de base (BS1, BS2, BS3, BS4) et un dispositif de réseau central (CN), le terminal mobile étant autorisé à accéder au réseau de télécommunication cellulaire sans fil à travers au moins une première station de base, le terminal mobile mémorisant une liste comprenant des informations permettant l'identification des signaux transférés par chaque première station de base, le terminal mobile ne mémorisant pas d'informations permettant l'identification des signaux transférés par des secondes stations de base, **caractérisé en ce que** le dispositif pour permettre à un terminal mobile d'accéder à un réseau de télécommunication cellulaire sans fil est compris dans le dispositif de réseau central et comporte:
- des moyens de détermination si une première station de base qui devrait transmettre des signaux au terminal mobile n'est pas opérationnelle,
- des moyens de transfert d'un message demandant à la seconde station de base de transférer des signaux qui devraient être transférés par l'une des premières stations de base dont les informations permettant l'identification des signaux transférés par la première station de base sont comprises dans la liste, pour identifier ladite première station de base et si la première station de base qui devrait transmettre des signaux vers le terminal mobile n'est pas opérationnelle,
- des moyens d'autorisation du terminal mobile d'accéder au réseau de télécommunication cellulaire sans fil à travers la seconde station de base qui transmet des signaux qui devraient être transférés par l'une des premières stations de base dont l'information permettant l'identification des signaux transférés par la première station de base est comprise dans la liste.

12. Programme d'ordinateur qui peut être directement chargeable dans un dispositif programmable, comportant des instructions ou portions de code pour mettre en oeuvre les étapes du procédé selon l'une des revendications 1 à 4, lorsque ledit programme informatique est exécuté sur un dispositif programmable.

13. Programme d'ordinateur qui peut être directement chargeable dans un dispositif programmable, comportant des instructions ou portions de code pour mettre en oeuvre les étapes du procédé selon les revendications 5 à 9, lorsque ledit programme informatique est exécuté sur un dispositif programmable.
